# FASCICULE DE BREVET EUROPEEN

(11) **EP 4 399 152 B1**
(45) Date de publication et mention de la délivrance du brevet: **22.01.2025**
(21) Numéro de dépôt: 22840244.2
(22) Date de dépôt: 29.11.2022
(51) Int. Cl.: B64G 1/50, B64G 1/66, F17C 3/08, B33Y 80/00, B22F 5/10

(54) **CRYOSTAT POUR UN COMPOSANT SPATIAL**
KRYOSTAT FÜR EIN RAUMBAUTEIL
CRYOSTAT FOR A SPACE COMPONENT

(30) Priorité: 02.12.2021 FR 2112876
(43) Date de publication de la demande: 17.07.2024
(73) Titulaire: Airbus Defence and Space SAS, 31402 Toulouse Cedex 4 (FR)
(72) Inventeur: CARPONCIN, Delphine, 31402 TOULOUSE Cedex 04 (FR); SIMON, Coraline, 31402 TOULOUSE Cedex 04 (FR); DE STEFANI, Eric, 31402 Toulouse cedex 4 (FR)
(74) Mandataire: Ipside
(86) Numéro de dépôt international: PCT/FR2022/052191
(87) Numéro de publication internationale: WO 2023/099837

(56) Documents cités:
- FR-A1- 2 410 211
- US-A- 3 253 423
- US-A- 3 355 050
- US-A- 3 369 370
- US-A1- 2019 017 645

## Description

### DOMAINE TECHNIQUE

La présente invention concerne le domaine de l'industrie spatiale, notamment des dispositifs de contrôle thermique des satellites artificiels, sondes spatiales et analogues.

L'invention concerne plus particulièrement un cryostat, destiné à recevoir un composant, comme par exemple un composant optique, fonctionnant à très basse température. Le cryostat est destiné à être embarqué, avec le composant, dans un engin spatial tel qu'un satellite, par exemple un satellite scientifique d'observation de la Terre.

### ÉTAT DE L'ART

Certains composants spatiaux, tels que les détecteurs optiques à infrarouge, doivent être mis en oeuvre à des températures stabilisées très basses, dites cryogéniques, pour que leurs performances soient garanties. Pour l'imagerie infrarouge (IR), un cryostat permet par exemple un découplage des températures entre la plateforme satellite sur laquelle est fixé le cryostat et l'intérieur du cryostat dans lequel est enfermé le composant optique comprenant des capteurs IR prévus pour fonctionner à des températures cryogéniques (de l'ordre de 60K).

FR2410211 divulgue un cryostat à cryogène liquide (hélium) destiné à coopérer avec un système optique, par exemple dans le cadre d'expériences d'astrophysique et de spectroscopie infra-rouge. Le cryostat comprend une cuve contenant de l'hélium liquide, suspendue à l'intérieur d'une enceinte étanche dans laquelle on a fait le vide. La cuve est munie d'un col sur lequel sont montés des échangeurs thermiques destinés à récupérer l'enthalpie du gaz cryogénique et sur lesquels sont montés à leur tour des panneaux de radiation refroidis par les échangeurs et destinés à limiter l'énergie transmise au bain d'hélium par suite du rayonnement extérieur et de la conduction thermique dans le col de la cuve et dans ses organes de suspension.

Ce type de cryostat présente une architecture particulièrement complexe, composée d'un nombre important de pièces assemblées occasionnant par là-même des processus d'intégration longs et coûteux, et dont l'assemblage est d'autant plus critique que le domaine spatial impose de respecter des spécifications géométriques, mécaniques et thermiques très exigeantes. En outre, ce type d'architecture limite généralement la taille et la forme des dispositifs qu'il est susceptible d'accueillir dans un espace utile de volume limité.

US 3,253,423 divulgue un autre cryostat de fabrication complexe.

### PRESENTATION DE L'INVENTION

L'invention vise à pallier au moins l'un des inconvénients précités. En particulier, un objectif de l'invention est de proposer un cryostat d'architecture simple, facile à fabriquer à un coût maîtrisé, et capable de loger des composants de formes et de tailles diverses, tout en ayant un encombrement et une masse réduits. Un autre objectif de l'invention est de fournir un cryostat capable de supporter des variations de températures entre son environnement extérieur et intérieur ainsi que des accélérations et des efforts mécaniques importants, sans que cela n'altère ses performances.

Pour ce faire, l'invention propose un cryostat destiné à accueillir au moins un composant spatial fonctionnant à température cryogénique, le cryostat comprenant :
- une enceinte centrale, fermée et refroidie, configurée pour recevoir le composant spatial,
- des écrans métalliques successifs, espacés les uns des autres, dont un écran intérieur, un écran extérieur et un ou plusieurs écrans intermédiaires, l'écran intérieur étant configuré pour supporter ledit composant spatial et délimitant l'enceinte centrale pour recevoir ledit composant spatial, le ou les écrans intermédiaires et l'écran extérieur étant disposés les uns autour des autres de façon à délimiter chacun un volume fermé recevant l'écran précédent de plus petite taille,
- un dispositif de refroidissement pour le refroidissement de l'enceinte centrale à température cryogénique,
- des éléments extérieurs de solidarisation fixés à l'écran extérieur, pour la solidarisation du cryostat à une plateforme satellite,
- des éléments intérieurs de jonction entre écrans, qui maintiennent lesdits écrans espacés les uns des autres.

Le cryostat selon l'invention est caractérisé en ce qu'il comprend au moins une partie monobloc comprenant une succession de cloisons dont une cloison intérieure, une cloison extérieure et une ou plusieurs cloisons intermédiaires, correspondant respectivement à une partie de l'écran intérieur, une partie de l'écran extérieur et une partie du ou des écrans intermédiaires, lesdites cloisons étant espacées les unes des autres et maintenues solidaires entre elles par au moins une partie des éléments intérieurs de jonction entre écrans.

Selon une caractéristique possible, le dispositif de refroidissement comprend un ou plusieurs doigts froids pour refroidir l'enceinte centrale et, pour chacun des doigts froids, un passage transversal traversant les écrans métalliques successifs jusqu'à l'enceinte centrale pour recevoir ledit doigt froid, le ou les doigts froids n'étant pas en contact avec les écrans.

Selon une caractéristique possible, les éléments intérieurs de jonction entre écrans sont disposés entre les écrans successifs et configurés pour assurer à eux seuls une tenue mécanique entre l'écran extérieur et l'écran intérieur, lesdits éléments intérieurs de jonction étant configurés pour supporter des efforts déterminés induits au moins par une masse du composant spatial et des masses des écrans.

Selon une caractéristique possible, les éléments intérieurs de jonction entre écrans comprennent des tiges doubles en V entre les écrans successifs, les V étant répartis angulairement autour d'un axe principal ou d'un point central du cryostat selon au moins trois directions radiales.

Selon une caractéristique possible, les éléments intérieurs de jonction entre écrans comprennent plusieurs ensembles de tiges simples, les tiges simples d'un même ensemble étant alignées selon une droite traversant les écrans, les droites de deux ensembles distincts étant non parallèles et non coplanaires entre elles.

Selon une caractéristique possible, les éléments intérieurs de jonction entre écrans sont réalisés d'un seul bloc avec au moins une partie des écrans.

Selon une caractéristique possible, la partie monobloc du cryostat est réalisée par fabrication additive.

Selon une caractéristique possible :
- le cryostat comprend une pluralité de parties monoblocs telle que précédemment définies c'est-à-dire ayant chacune une cloison intérieure, une cloison extérieure et une ou plusieurs cloisons intermédiaires, les cloisons de deux parties monoblocs distinctes parmi lesdites parties monoblocs correspondant à deux parties distinctes des écrans,
- les cloisons intermédiaires ou intérieures, de deux parties monoblocs distinctes et adjacentes parmi la pluralité de parties monoblocs, qui sont dans le prolongement l'une de l'autre étant non jointives,
- les cloisons extérieures, de deux parties monoblocs distinctes et adjacentes parmi la pluralité de parties monoblocs, qui sont dans le prolongement l'une de l'autre étant jointives et fixées l'une à l'autre.

En d'autres termes, deux parties monoblocs qui sont adjacentes sont fixées entre elles par leurs cloisons extérieures et uniquement par celles-ci.

Selon une caractéristique possible, les cloisons intermédiaires ou intérieures qui sont dans le prolongement l'une de l'autre, ont des extrémités en vis-à-vis dont au moins l'une de ces extrémités en vis-à-vis présente un décrochement de façon à former une chicane avec l'autre extrémité en vis-à-vis.

Selon une caractéristique possible, les éléments extérieurs de solidarisation sont soit tous fixés sur la cloison extérieure d'une seule des parties monoblocs, soit répartis sur les cloisons extérieures de plusieurs des parties monoblocs.

Selon une caractéristique possible, au moins l'une desdites parties monoblocs est une partie structurale annulaire dont chaque cloison intérieure, intermédiaire et extérieure est annulaire.

Selon une caractéristique possible, chacun des écrans du cryostat est entièrement formé par l'assemblage des cloisons des parties monoblocs.

En variante, le cryostat comprend au moins une partie structurale annulaire monobloc telle que précédemment définie et :
- le cryostat comprend au moins une série de capots indépendants dont, pour chaque série, un capot intérieur, un capot extérieur et un ou plusieurs capots intermédiaires, chaque série de capots correspondant respectivement à une autre partie des écrans, les capots d'une même série étant agencés les uns dans les autres, à distance les uns des autres, sans éléments intérieurs de jonction ; en d'autres termes, contrairement aux cloisons de la partie structurale annulaire (ou plus généralement des parties monoblocs susmentionnées), les capots ne sont pas directement liés entre eux ;
- chacun desdits capots venant dans le prolongement de et étant fixé à l'une des cloisons de ladite partie structurale annulaire, chacun des écrans du cryostat étant ainsi entièrement formé par au moins l'une des cloisons de la partie structurale annulaire et par l'un des capots de chaque série.

A noter que, dans cette variante, le cryostat peut comprendre plusieurs parties monoblocs correspondant à différentes parties des écrans, les écrans étant intégralement formés grâce à l'adjonction (aux cloisons desdites parties monoblocs) d'une ou plusieurs séries de capots indépendants, correspondant respectivement à une ou plusieurs autres parties des écrans.

Selon une caractéristique possible, au moins une partie de chacun des capots est pourvue d'un revêtement doré.

Selon une caractéristique possible, chacun des doigts froids définis plus haut est thermiquement isolé des écrans, un revêtement thermiquement isolant étant disposé contre au moins l'un des doigts froids dans le passage transversal dudit doigt froid et/ou un revêtement thermiquement isolant en soufflet étant disposé, autour d'au moins l'un des doigts froids, dans le passage transversal dudit doigt froid et entre les écrans.

L'invention s'étend à un engin spatial, par exemple un satellite, caractérisé en ce qu'il comprend un composant spatial, qui fonctionne à température cryogénique et est disposé dans un cryostat selon l'invention, le cryostat étant fixé sur une plateforme de l'engin spatial.

Les concepts fondamentaux de l'invention venant d'être exposés ci-dessus dans leur forme la plus élémentaire, d'autres détails, caractéristiques et avantages ressortiront à la lecture de la description qui suit et en référence aux dessins annexés, donnant à titre d'exemples non limitatifs de réalisation d'un cryostat conforme aux principes de l'invention.

### BREVE DESCRIPTION DES FIGURES

La figure 1 est une vue schématique en perspective d'un premier exemple de cryostat selon l'invention, comprenant deux parties monoblocs.
La figure 2 représente le cryostat de la figure 1 vu en coupe selon un plan longitudinal médian.
La figure 3 est une vue de face d'une partie monobloc du cryostat de la figure 1.
La figure 4 est une vue en perspective de la partie monobloc de la figure 3, du côté fermé.
La figure 5 est une autre vue en perspective de la partie monobloc de la figure 3, du côté ouvert.
La figure 6 est une vue en perspective, du côté fermé, de l'autre partie monobloc du cryostat de la figure 1.
La figure 7 est une autre vue en perspective de la partie monobloc de la figure 6, du côté ouvert.
La figure 8 représente les écrans du cryostat de la figure 1, vus en coupe par un plan transversal, montrant des éléments intérieurs de jonction en V.
La figure 9A est une coupe partielle selon un plan longitudinal A-A des écrans de la figure 8.
La figure 9B est une coupe partielle selon un plan longitudinal B-B des écrans de la figure 8.
La figure 10 est une vue schématique, en coupe, du cryostat des figures précédentes avec ses deux parties monoblocs assemblées, montrant la configuration des éléments intérieurs de jonction.
La figure 11 est une vue en perspective de la partie monobloc de la figure 3 et d'un composant spatial fonctionnant à température cryogénique, représenté séparément et destiné à être logé dans celle-ci.
La figure 12 est une vue de face de la partie monobloc de la figure 3 contenant le composant spatial avec, représentés séparément, des organes fonctionnels du cryostat, tels que des doigts froids.
La figure 12A représente un doigt froid passant à travers les écrans selon un exemple de réalisation.
La figure 12B représente un doigt froid passant à travers les écrans selon un autre exemple de réalisation.
La figure 13 représente les éléments de la figure 12 assemblés, vus de face.
La figure 14 est une vue en perspective du cryostat de la figure 12 complètement assemblé.
La figure 15 est une vue en perspective éclatée d'un deuxième exemple de cryostat selon l'invention, comprenant trois parties monoblocs, à savoir une partie centrale annulaire, une embase et un couvercle.
La figure 16 est une vue en perspective de la partie centrale annulaire et de l'embase du cryostat de la figure 15, avec un ou des détecteurs et leur appareillage (le composant spatial) fixé à l'embase.
La figure 17 est une vue en perspective du cryostat de la figure 15 contenant le composant spatial fonctionnant à température cryogénique, avant sa fermeture par le couvercle.
La figure 18 est une vue de dessus du cryostat de la figure 17 sans le couvercle.

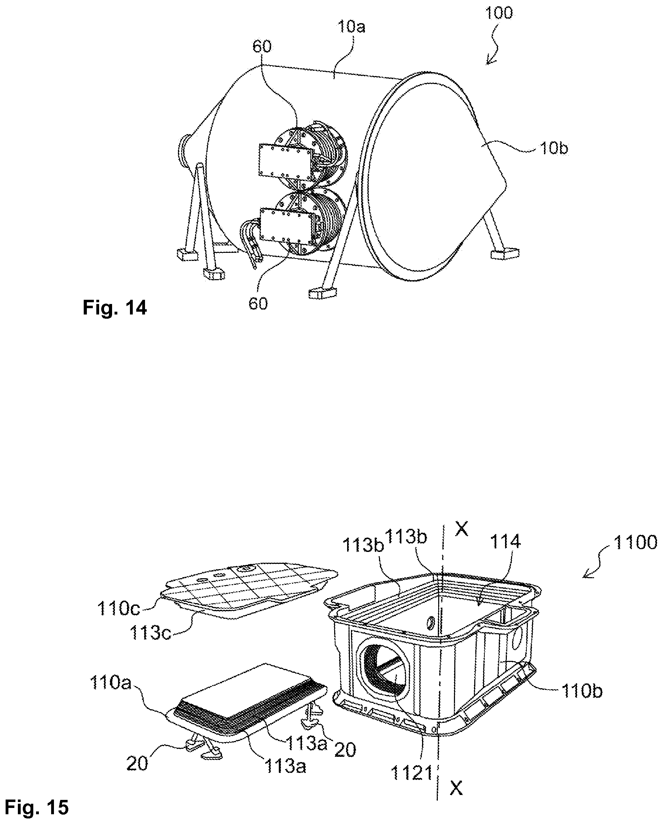

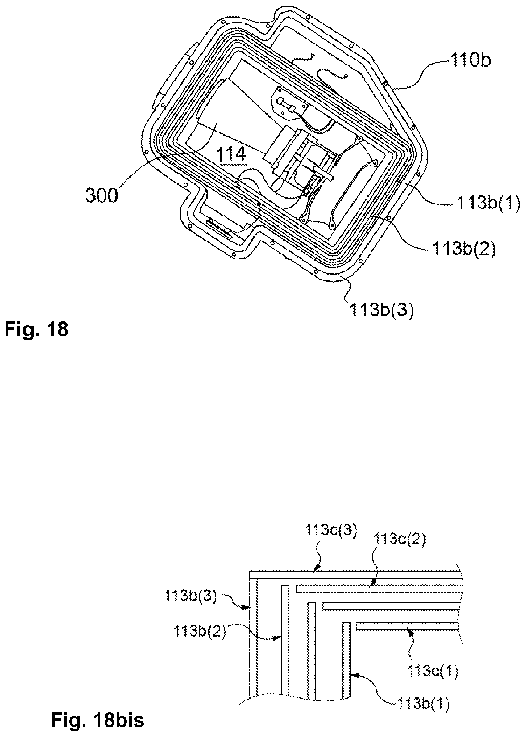

La figure 18bis montre un détail d'agencement des extrémités de cloisons formant des écrans, relatif par exemple au deuxième exemple de cryostat des figures 15 à 18.

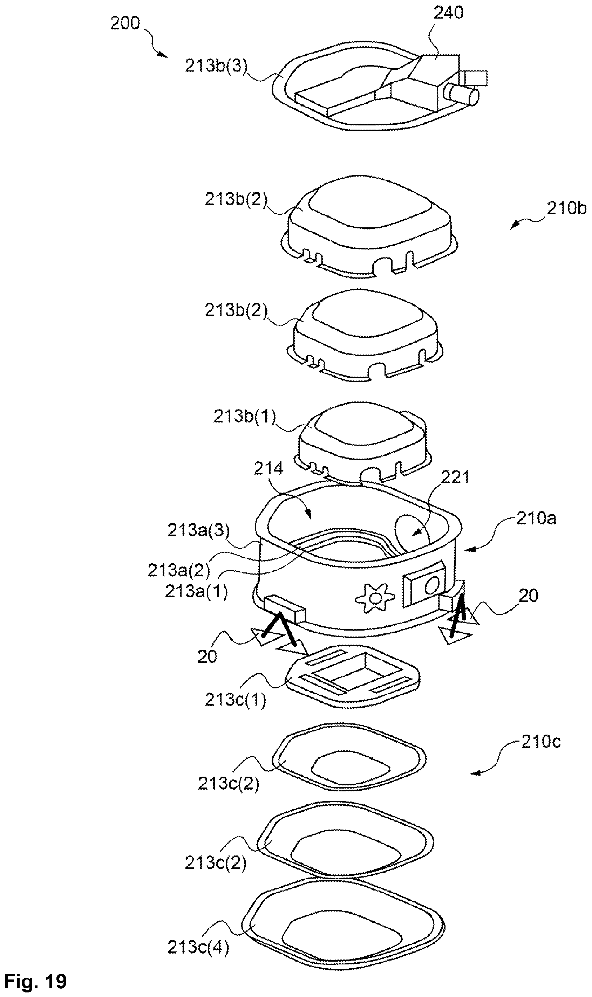

La figure 19 est une vue en perspective éclatée d'un troisième exemple de cryostat selon l'invention, comprenant une partie monobloc annulaire et deux séries de capots.

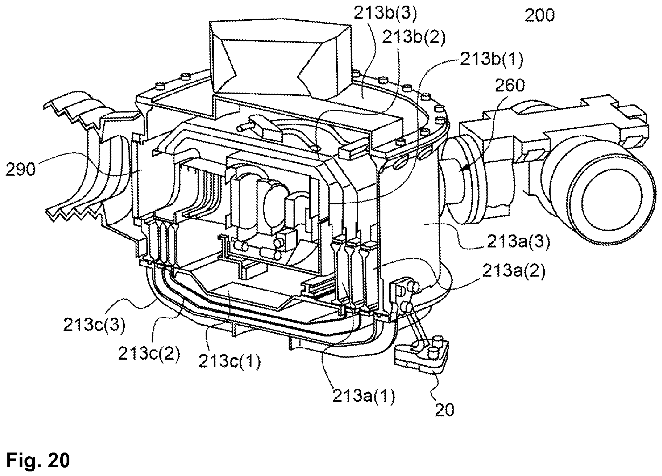

La figure 20 est une vue en coupe par un plan longitudinal médian du cryostat de la figure 19 équipé de divers organes fonctionnels et contenant un composant spatial fonctionnant à température cryogénique.

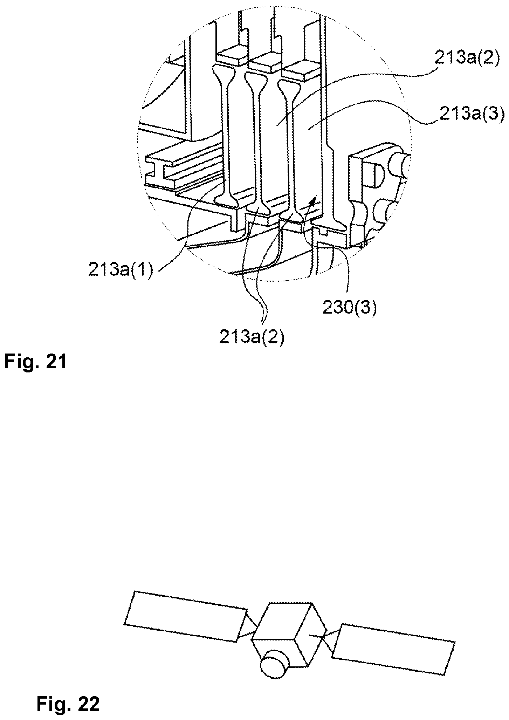

La figure 21 montre un détail de la figure 20, en perspective.
La figure 22 montre un satellite selon l'invention.

Les différentes figures et les éléments d'une même figure ne sont pas nécessairement représentés à la même échelle. Par ailleurs, ses figures sont toutes schématiques, avec des degrés divers de détails. A noter enfin que, sur l'ensemble des figures, les éléments identiques ou équivalents portent la même référence numérique.

### DESCRIPTION DETAILLEE

Dans la présente description, on fait référence à un cryostat destiné principalement à un instrument optique, tels qu'un interféromètre infrarouge, embarqué dans un satellite de type météorologique. Cet exemple non limitatif est donné pour une meilleure compréhension de l'invention et n'exclut pas l'utilisation du cryostat dans d'autres applications, par exemple pour coopérer avec d'autres instruments de mesure dans des satellites d'observation, de télécommunication ou d'étude astrophysique.

Dans toute la description, le terme « satellite » désigne un satellite artificiel, et les expressions synonymes « fabrication additive » et « impression 3D » sont indifféremment employées pour désigner tout procédé, assisté par ordinateur, de mise en forme d'une pièce par empilement de couches successives ou par ajout quelconque de matière.

Le composant spatial fonctionnant à température cryogénique est par exemple un composant sensible constituant un détecteur tel qu'un détecteur optique.

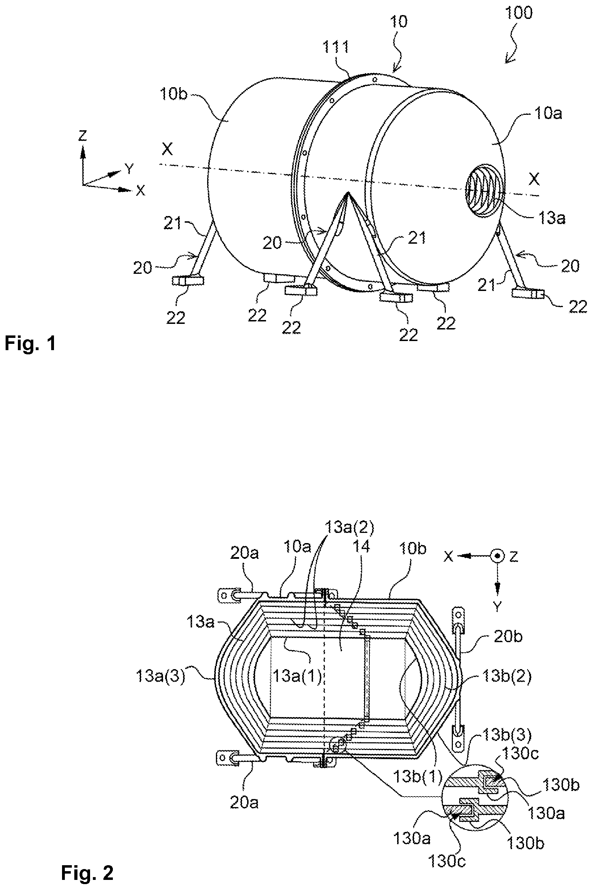

La figure 1 représente un cryostat 100 selon un premier exemple de réalisation formé à partir de deux parties monobloc 10a et 10b, jointes entre elles.

Chaque partie monobloc 10a, 10b comprend une succession de cloisons dont une cloison intérieure 13a(1), 13b(1), une cloison extérieure 13a(3), 13b(3) et des cloisons intermédiaires 13a(2), 13b(2).

Des éléments extérieurs de solidarisation 20 permettent de fixer le cryostat à une plateforme satellite (non représentée).

Lorsqu'elles sont assemblées, les parties monoblocs 10a et 10b forment une succession d'écrans métalliques 13 fermés, agencés les uns autour des autres. Les cloisons intérieures, intermédiaires et extérieures des parties monoblocs forment ainsi respectivement un écran intérieur, des écrans intermédiaires et un écran extérieur.

Comme on le voit sur la figure 2, l'écran 13 de plus petite taille, situé à l'intérieur de tous les autres, délimite une enceinte centrale 14 fermée dont le volume utile présente une forme et des dimensions adaptées à l'intégration d'un ou plusieurs composants spatiaux fonctionnant à basses ou très basses températures (de l'ordre de 60K par exemple).

L'écran métallique intérieur qui délimite l'enceinte cryogénique n'est, par exemple, pas étanche mais forme une barrière aux rayonnements thermiques. Les écrans métalliques intermédiaires ne sont, par exemple, pas étanches mais forment chacun une barrière aux rayonnements thermiques.

Dans l'exemple illustré, le corps 10 présente globalement une symétrie de révolution autour d'un axe longitudinal X.

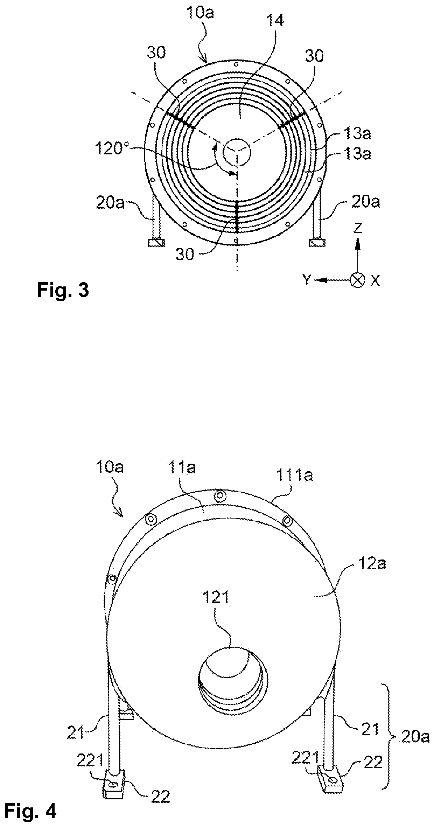

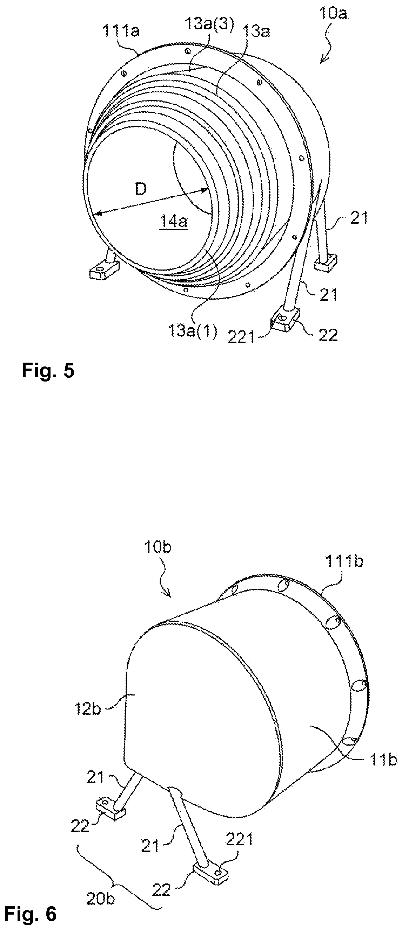

Les parties structurales monoblocs 10a et 10b présentent chacune (voir Fig. 4 et 6) une cloison extérieure cylindrique 11a, 11b, ouverte d'un côté selon une section circulaire et prolongée, de l'autre côté par une portion conique 12a, 12b. Le coté circulaire ouvert est pourvu d'une bride de fixation 111a et 111b circulaire. Ces brides permettent une jonction et une fixation des cloisons extérieures entre elles, par exemple via des moyens de serrage adaptés tels que des boulons introduits dans des trous en regard.

Chaque cloison intérieure 13a(1) ou respectivement intermédiaire 13a(2) de la partie monobloc 10a est disposée dans le prolongement d'une cloison intérieure 13b(1) ou respectivement intermédiaire 13b(2) de la partie monobloc 10b. Les extrémités en vis-à-vis 130a et 130b de deux cloisons intérieures ou intermédiaires situées dans le prolongement l'une de l'autre restent à distance l'une de l'autre. Les zones de rapprochement de ces extrémités en vis-à-vis sont décalées longitudinalement (c'est-à-dire que ces zones de rapprochement entre cloisons intérieure ou intermédiaire ne sont pas situées dans un même plan transversal) pour augmenter l'effet de barrière aux radiations thermiques et permettre leur montage tout en maintenant une distance réduite entre écrans successifs.

Le fait de prévoir ainsi des cloisons intermédiaires et intérieures non jointives permet de limiter le frottement des cloisons entre elles et l'érosion des cloisons qui survient à leur jonction sous l'effet des vibrations que subit le cryostat, une telle érosion devant être évitée car elle peut produire des particules susceptibles de se détacher des cloisons, de migrer vers l'enceinte centrale du cryostat et de polluer le composant spatial qui s'y trouve.

En outre, l'une des extrémités 130a en vis-à-vis est prolongée selon un profil en U pour créer une chicane 130c avec l'autre extrémité 130b, et ainsi augmenter encore l'effet de barrière aux radiations thermiques. En variante, on aurait pu prolonger l'une et/ou l'autre des extrémités en vis-à-vis selon un profil en L.

La formation d'une telle chicane 130c à la traversée d'un écran permet de limiter les échanges thermiques radiatifs entre écrans consécutifs en formant des barrières.

Afin de maintenir le composant spatial fonctionnant à température cryogénique à des températures basses ou très basses, l'enceinte 14 est refroidie par deux doigts froids 60 disposés chacun dans un passage transversal 15 traversant les écrans métalliques successifs de l'écran extérieur jusqu'à l'écran intérieur pour arriver à l'enceinte centrale 14.

On pourrait aussi envisager un cryostat fonctionnant à l'aide d'un seul doigt froid.

Le corps 10 du cryostat comprend ainsi une succession d'écrans 13 métalliques. Ces écrans font chacun obstacle aux radiations thermiques et permettent ainsi de conserver l'enceinte centrale 14 à des températures régulées. L'ensemble des écrans réalise ainsi une fonction d'isolation thermique du composant spatial fonctionnant à température cryogénique par rapport à l'environnement extérieur spatial et par rapport à la plateforme satellite.

Dans l'exemple présenté, chaque partie monobloc 10a, 10b comprend une pluralité de cloisons 13a, 13b successives, coaxiales et espacées les unes des autres qui, lorsque les parties monoblocs sont assemblées, forment intégralement les écrans successifs.

Les cloisons 13a, 13b de chaque partie monobloc 10a, 10b peuvent par exemple présenter des formes identiques mais à des tailles croissantes depuis la cloison intérieure 13a(1), 13b(1) jusqu'à la cloison extérieure 13a(3), 13b(3), en passant par des cloisons intermédiaires successives 13a(2) et 13b(2). Ainsi, dans les deux parties monoblocs, les cloisons comportent des tronçons cylindriques ouverts à une extrémité et fermés à l'autre extrémité par des tronçons sensiblement coniques.

Chacune des deux parties monoblocs est une partie structurale dont chaque cloison intérieure, intermédiaire et extérieure comporte une portion annulaire. La portion annulaire de chaque cloison se prolonge, d'un seul bloc, par une portion fermée conique.

Les ouvertures circulaires des cloisons viennent chacune en vis-à-vis d'une ouverture circulaire d'une autre cloison pour former un écran. Ainsi chaque écran se compose d'une portion conique prolongée par une portion de section circulaire elle-même venant dans le prolongement d'une autre portion circulaire se prolongeant par une portion conique.

Les deux parties monoblocs comprennent un nombre identique de cloisons (huit dans l'exemple illustré, soit six cloisons intermédiaires), qui s'associent donc par paires, le nombre de cloisons pouvant varier suivant les performances d'isolation recherchées.

Les cloisons intermédiaires 13a(2) et 13b(2) appariées présentent leur portion de section circulaire en regard et dans le prolongement l'une de l'autre.

Les deux parties monoblocs 10a et 10b sont par ailleurs fixées entre elles par les brides de fixation 111a, 111b au niveau de leur cloison extérieure.

Les extrémités en regard et à distance des cloisons intermédiaires forment par exemple également un décrochement. Pour chaque paire de cloisons 13a(2), 13b(2) associées, l'extrémité de l'une des cloisons, par exemple l'extrémité 130a de la cloison 13a(2), présente une section en forme de U sur toute sa périphérie, qui définit une partie « femelle », à l'intérieur de laquelle vient s'avancer l'extrémité130b, en tant que partie « mâle », de l'autre cloison 13b(2) qui présente une section droite sur toute sa périphérie. Ces deux extrémités restent à distance l'une de l'autre. Il en va de même pour les cloisons intérieures 13a(1) et 13b(1).

La répartition des parties mâles et femelles peut être, par exemple, alternée entre les cloisons 13a, 13b de l'une et l'autre des parties monobloc.

La zone de rapprochement entre deux cloisons 13a et 13b dessine ainsi une chicane 130c qui contribue à limiter les échanges radiatifs thermiques entre deux écrans 13 successifs.

Cette zone de rapprochement s'effectue de préférence sans contact, afin de limiter les frottements entre cloisons sous l'effet des vibrations auxquelles est soumis le cryostat. Les écrans métalliques successifs réalisent ainsi des obstructions non étanches successives.

Les jonctions (c'est-à-dire les zones de rapprochement) suivent par exemple un agencement tronconique, matérialisée en trait interrompu sur la figure 2.

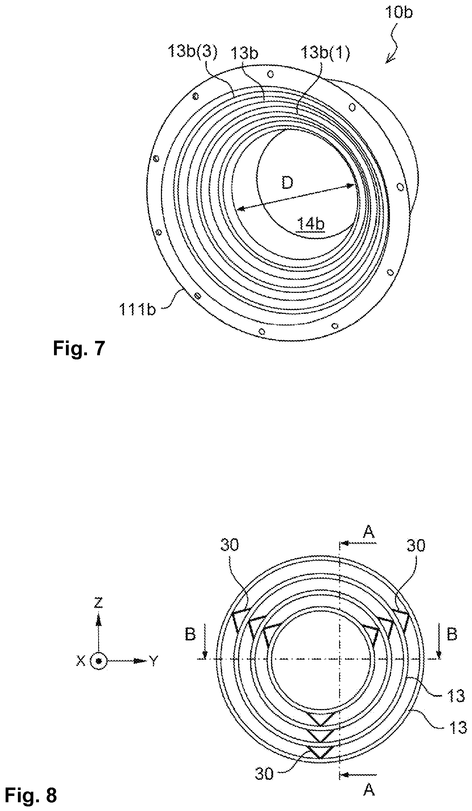

Ainsi, comme illustré à la figure 5, les cloisons 13a de la partie monobloc 10a font par exemple saillie par rapport au plan contenant la face d'assemblage de la bride 111a, avec une longueur de saillie croissante de la cloison extérieure 13a(3) à la cloison intérieure 13a(1). Les cloisons 13b de la partie monobloc 10b, visibles sur la figure 7, sont quant à elles en retrait par rapport au plan contenant la face d'assemblage de la bride 111b, avec une longueur de retrait croissante de la cloison extérieure 13b(3) à la cloison intérieure 13b(1), de sorte que la partie monobloc 10b présente une forme complémentaire de celle de la partie monobloc 10a, pour permettre un raccordement selon la configuration illustrée à la figure 2.

Les cloisons intérieures 13a(1) et 13b(1) des parties structurales monoblocs 10a et 10b présentent un diamètre identique D qui délimite des volumes utiles 14a et 14b respectivement, dont l'association forme l'enceinte centrale 14 recevant le composant spatial à refroidir.

Il convient de rappeler que l'isolation thermique assurée par le cryostat 100 nécessite que les écrans 13 soient écartés les uns des autres et maintenus dans cette position. En outre les éléments de jonction venant en contact avec deux écrans successifs sont optimisés pour limiter les échanges thermiques par conduction.

A cette fin, les cloisons 13a, 13b de chaque partie monobloc 10a, 10b sont reliées entre elles par des éléments intérieurs de jonction 30, dont l'agencement permet d'optimiser à la fois la raideur, la tenue mécanique et la conduction thermique de structure mécano-thermique du cryostat. Le cryostat dans son ensemble présente ainsi une bonne résistance thermique entre l'enceinte centrale 14 et l'environnement extérieur. Le cryostat présente également une bonne raideur et tenue mécanique en tenant compte des conditions d'utilisation du cryostat, qui peuvent être extrêmes en termes d'accélérations et de vibrations subies (notamment lors de la phase de lancement de l'engin spatial dans lequel le cryostat est installé).

Le cryostat dans son ensemble présente ainsi une bonne résistance thermique entre l'enceinte centrale 14 et l'environnement extérieur.

Par exemple, dans chaque partie monobloc, les éléments intérieurs de jonction 30 peuvent être distribués radialement en plusieurs groupes uniformément répartis sur 360°. Par exemple, les éléments intérieurs de jonction 30 sont répartis en trois groupes suivant trois droites formant deux à deux un angle de 120° comme représenté sur la figure 3.

Par ailleurs, des éléments extérieurs de solidarisation 20 maintiennent l'écran extérieur, et donc le corps 10 du cryostat, à une plateforme satellite (non représentée). Ces éléments extérieurs de solidarisation sont optimisés à la fois en termes mécaniques de façon à garantir un bon maintien du cryostat, et en termes thermiques, de façon à limiter les échanges thermiques entre le corps 10 du cryostat et son environnement extérieur (en particulier ladite plateforme satellite).

Les éléments extérieurs de solidarisation 20 ont par exemple une forme de bipodes et comportent chacun deux branches 21 en V qui se terminent chacune par une semelle 22 permettant la fixation du cryostat à la plateforme satellite par exemple par des perçages adaptés 221 qui recevront des éléments de fixation spécifiques tels que des vis, rondelles et écrous.

Dans l'exemple illustré, le cryostat 100 comporte trois bipodes extérieurs 20 dont deux bipodes 20a solidaires d'une des parties monoblocs 10a, et un bipode 20b solidaire de l'autre partie monobloc 10b. Grâce à des orientations différentes des bipodes, on supprime tous les degrés de libertés de l'écran extérieur 13(3) par rapport à la plateforme satellite.

La partie monobloc fixée à deux bipodes est par exemple destinée à supporter le composant spatial fonctionnant à température cryogénique.

Comme représenté à la figure 4, le composant spatial fonctionnant à température cryogénique, tel qu'un détecteur optique, opère à travers une fenêtre frontale 121, ménagée au niveau du sommet d'une portion conique et fermée par une ou plusieurs vitres.

Les bipodes extérieurs 20 relient le cryostat 100 à une plateforme satellite, en étant physiquement au contact de celle-ci, et constituent donc un milieu de conduction dans lequel s'établit la diffusion thermique entre la plateforme et le cryostat.

Les éléments intérieurs de jonction 30, reliant les écrans 13 entre eux, réalisent également un maintien mécanique, tout en limitant les transferts thermiques par conduction, grâce à des agencements spécifiques.

Les parties monoblocs comprenant plusieurs cloisons, formant chacune une portion d'écran, peuvent être obtenues par fabrication additive (impression 3D).

Les éléments intérieurs de jonction entre écrans sont par exemple réalisés d'un seul bloc avec des cloisons, notamment si la fabrication additive est utilisée.

Le matériau de construction est par exemple l'invar ou le titane.

La disposition géométrique des éléments intérieurs de jonction 30, entre les écrans 13 sera par exemple optimisée et validée par des séries de simulations et de tests mécaniques et thermiques réalisés à l'aide d'outils informatiques et d'installations expérimentales.

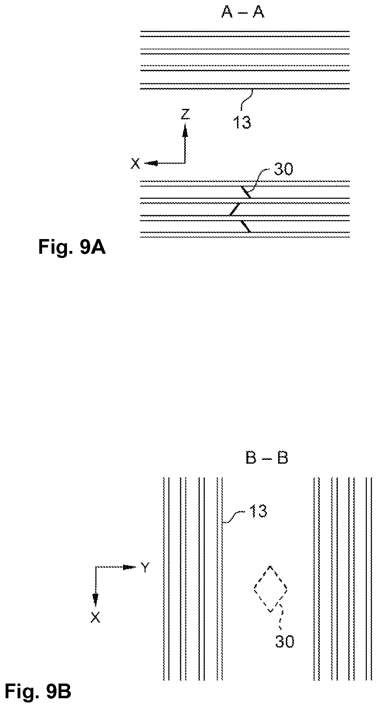

Les figures 8, 9A et 9B schématisent une disposition géométrique des éléments intérieurs de jonction 30 selon un exemple de réalisation de l'invention. Pour une meilleure lisibilité, les écrans 13 sont représentés en nombre réduit sur ces figures. Cette disposition géométrique a été choisie sur la base de simulations mécaniques et thermiques ; elle permet d'obtenir les résultats escomptés en termes de tenue mécanique et de résistance thermique.

Comme représenté à la figure 8, les éléments intérieurs de jonction 30, sont répartis suivant trois directions radiales, c'est-à-dire en trois groupes uniformément répartis sur 360° dans un plan transversal, les axes desdits groupes définissant deux à deux un angle égal ici à 120°. Pour chaque partie monobloc, chaque groupe d'éléments intérieurs de jonction comprend par exemple un élément intérieur de jonction 30 entre chaque paire d'écrans consécutifs.

Les éléments intérieurs de jonction entre écrans sont optimisés en termes de section à la fois pour garantir la tenue mécanique du cryostat et pour limiter la conduction thermique (plus la section de l'élément intérieur de jonction 30 sera petite, plus la conduction thermique sera faible).

Dans l'exemple de réalisation des figures 8 à 10, chaque élément intérieur de jonction 30 est formé par une tige double en V, comportant deux branches définissant un plan. Comme expliqué ci-après, ce plan peut être incliné par rapport à un plan transversal du corps de cryostat.

En référence aux figures 9A et 9B, montrant leur position longitudinale, les éléments intérieurs de jonction 30 sont par exemple, inclinés par rapport à un plan transversal (en l'occurrence ici, les bases des V sont toutes situées dans un même premier plan transversal tandis que les extrémités libres des branches des V sont situées dans des plans transversaux voisins de ce premier plan transversal), cette inclinaison s'effectuant alternativement en direction de l'une ou l'autre des extrémités axiales du corps 10.

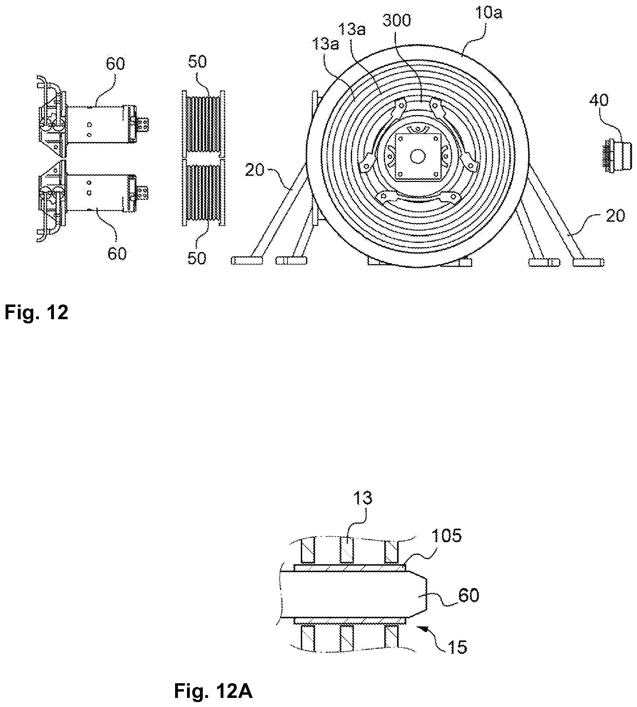

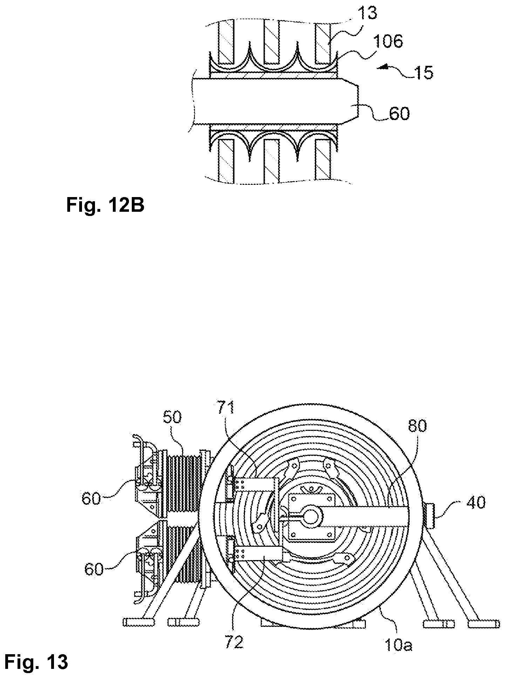

Comme représenté à la figure 12, deux doigts froids 60 traversent les écrans pour réaliser un refroidissement de l'enceinte centrale 14. Chaque doigt froid est disposé à distance des écrans.

Comme représenté à la figure 12A, un revêtement thermiquement isolant 105, par exemple du type multicouche, également appelé « MLI » (acronyme de l'anglais *multi-layer insulation*) , peut être disposé, dans le passage transversal 15, contre chaque doigt froid 60, renforçant ainsi l'isolation thermique du cryostat.

En variante ou éventuellement en combinaison, comme représenté à la figure 12B, un revêtement thermiquement isolant en soufflet 106, par exemple en polymère, peut être disposé, autour de chaque doigt froid 60, dans le passage transversal 15 et entre les écrans 13.

Les figures 15 à 18 représentent un exemple de réalisation dans lequel le cryostat 100 est constitué de trois parties monoblocs : une embase 110a, une partie centrale annulaire 110b et un couvercle 110c, qui s'assemblent pour former le corps du cryostat. Les parties monoblocs comportent chacune une pluralité de cloisons d'isolation 113a, 113b et 113c, et présentent des formes adaptées à l'intégration d'un composant 300 spatial donné. Les formes des différentes parties monoblocs 110a, 110b et 110c sont également complémentaires de sorte que chaque cloison d'une partie monobloc soit associée à l'une des cloisons de chacune des deux autres parties monoblocs pour former un écran.

Plus particulièrement, selon cet exemple de réalisation, le corps du cryostat 100 présente une forme globalement parallélépipédique dont la partie monobloc centrale 110b matérialise les faces latérales, et dont l'embase 110a et le couvercle 110c matérialisent respectivement la face inférieure et la face supérieure.

La partie monobloc centrale 110b comprend une succession de cloisons 113b annulaires agencées à distance les unes des autres de façon coaxiale autour d'un axe principal X (matérialisé sur la figure 15). Elle comprend notamment une cloison intérieure 113b(1) délimitant l'enceinte 114 qui reçoit le composant 300 spatial fonctionnant à température cryogénique, des cloisons intermédiaires 113b(2), et une cloison extérieure 113b(3).

Dans cet exemple, les cloisons intermédiaires et la cloison intérieure sont de forme similaire et de dimensions croissantes de l'intérieur vers l'extérieur. En revanche la cloison extérieure 113b(3) s'éloigne par endroits de la cloison intermédiaire la plus externe pour former des logements de réception de divers organes fonctionnels du cryostat tels des moyens de connexion électrique.

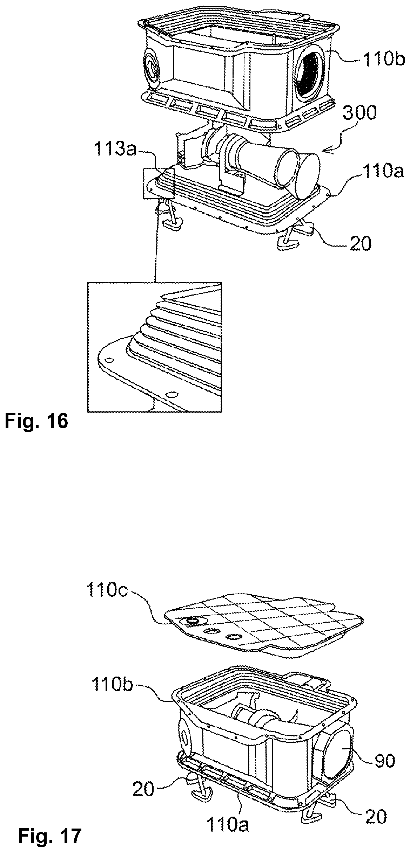

L'embase 110a et le couvercle 110c comprennent des cloisons planes 113a et 113c agencées à distance les unes des autres et ayant des dimensions décroissantes de l'extérieur du cryostat vers l'intérieur, donnant à l'embase et au couvercle une allure pyramidale. Cette allure pyramidale, bien visible sur le détail de la figure 16, permet une bonne accommodation du cryostat.

Comme représenté à la figure 18bis, les cloisons intérieures 113b(1), 113c(1) et intermédiaires 113b(2), 113c(2) des deux parties monoblocs, sont disposées au voisinage l'une de l'autre pour former un écran fermé de façon non étanche, en ayant leurs extrémités à distance l'une de l'autre. Ces deux parties monoblocs peuvent correspondre à la partie monobloc centrale 110b et au couvercle 110c ou à la partie monobloc centrale 110b et à l'embase 110a.

Dans cet exemple de réalisation du cryostat 100 en trois parties monoblocs, seule l'embase 110a est pourvue de bipodes extérieurs 20 (formant des éléments extérieurs de solidarisation entre le cryostat et une plateforme satellite), ce qui permet de concentrer les chemins d'effort uniquement dans ladite embase.

A l'instar de l'exemple de réalisation précédemment décrit, les bipodes extérieurs 20 et les éléments intérieurs de jonction peuvent être fabriqués dans le même matériau que les cloisons 113a, 113b ou 113c auxquelles ils sont associés, par exemple en un matériau métallique présentant les propriétés thermiques et mécaniques adéquates, de préférence en titane.

Le titane offre un bon compromis entre propriétés mécaniques (raideur et tenue suffisantes) et propriétés thermiques (conductivité thermique relativement faible par rapport à d'autres métaux comme l'aluminium par exemple). Le titane est de surcroît compatible avec l'impression 3D.

L'utilisation d'une technique de fabrication additive, telle que la technologie de fusion laser sur lit de poudre, est avantageuse en ce qu'elle permet la fabrication de plusieurs éléments (cloisons, éléments intérieurs de jonction, et éléments extérieurs de solidarisation) en une seule pièce monolithique. De surcroît la fabrication additive permet l'obtention de pièces métalliques de formes fines, complexes et intriquées comme c'est le cas des parties monoblocs (présence d'une pluralité de cloisons intérieures reliées par des éléments de jonction) avec une configuration précise.

D'autres techniques de fabrication peuvent être utilisées, de même que d'autres matériaux que le titane, y compris des matériaux non compatibles avec l'impression 3D, cette dernière n'étant qu'une méthode de fabrication optionnelle, certes avantageuse, du cryostat selon l'invention. Même si la fabrication additive n'est pas utilisée, la conception du cryostat selon l'invention reste relativement simple. En tout état de cause, le cryostat selon l'invention présente au moins l'avantage de la compacité et celui de pouvoir accueillir un ou des composants spatiaux fonctionnant à température cryogénique de forme et de tailles diverses.

Selon la géométrie globale du cryostat, qui est d'abord dictée par la forme du composant spatial qu'il est destiné à accueillir, et selon le nombre de parties monoblocs qui composent le cryostat, ainsi que le ou les matériaux choisis, des simulations informatiques thermiques et mécaniques sont exécutées pour déterminer le nombre d'écrans 13, ainsi que leurs épaisseurs et l'épaisseur des lames de vide les séparant, permettant d'atteindre, sans revêtements spécifiques ni feuilles SLI (acronyme de l'anglais « *Single Layer Insulation* ») ni isolant multicouche MLI (*Multi Layer Insulation*), des performances thermiques et mécaniques équivalentes ou supérieures à celles de cryostats de l'art antérieur.

Typiquement, ce nombre a été évalué à sept écrans dans certaines conditions de fonctionnement usuelles.

Plus généralement, le nombre d'écrans peut être adapté en fonction des missions, pour se conformer à des spécifications thermiques précises. Par exemple, il peut arriver que les températures cibles dans le volume intérieur du cryostat soient supérieures aux valeurs évoquées plus haut (60K et 100K), auquel cas un nombre inférieur d'écrans intermédiaires, par exemple deux ou trois, suffirait à assurer l'isolation thermique ciblée.

Un autre avantage de l'invention est que, si l'on souhaite augmenter les performances d'isolation thermique d'un cryostat, on peut choisir d'ajouter un ou plusieurs écrans à un design initial déjà éprouvé, sans que cela impacte de façon significative le processus de conception, de qualification et de fabrication du cryostat. Ceci est d'autant plus vrai lorsque l'impression 3D est utilisée. En effet, il s'avère moins coûteux et moins contraignant d'ajouter au cryostat un écran intermédiaire supplémentaire, qui sera fabriqué par impression 3D en même temps que les écrans initiaux, que d'intercaler des feuilles d'isolation monocouche SLI ou multicouche MLI entre deux écrans successifs d'un cryostat initial par exemple.

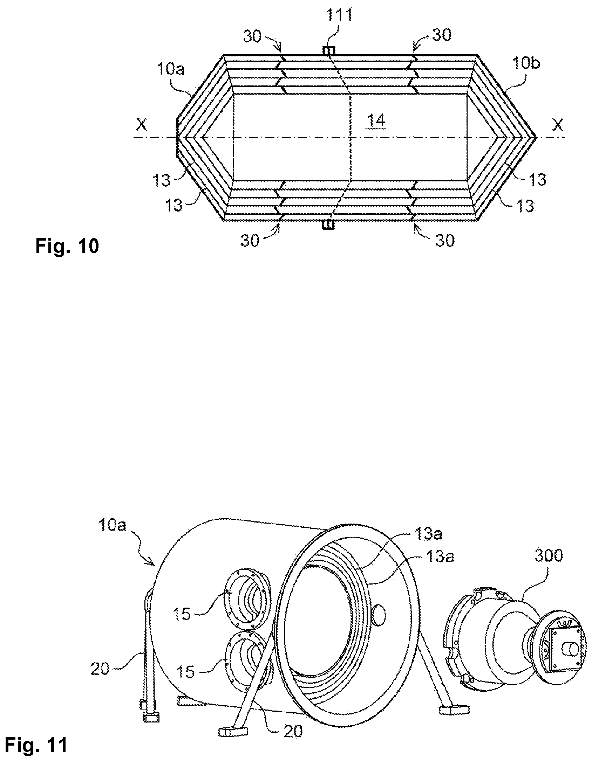

L'installation d'un composant spatial, tel qu'un capteur, dans le cryostat est illustrée sur les figures 11 à 14.

Dans un premier temps, il s'agit de positionner le composant spatial 300 à l'intérieur de la première partie monobloc 10a et de le fixer à la cloison intérieure 13a(1) à l'aide de moyens de liaison adaptés. Sont ensuite installés, sur le corps du cryostat, une connectique électrique 40 et des doigts froids 60.

Au moins un canal transversal est par exemple réalisé dans les écrans successifs jusqu'à l'enceinte centrale pour le passage de moyens d'alimentation électrique et/ ou de moyens de communication avec le composant spatial, lequel canal est fermé au niveau de l'écran extérieur par une interface de connexion isolée thermiquement.

De préférence, des soufflets 50 sont prévus autour des doigts froids 60 pour limiter les effets des micro-vibrations générées par le compresseur sur les doigts et les isoler thermiquement. Les doigts froids sont insérés dans des passages 15 ménagés dans le corps, les passages 15 traversant l'ensemble des cloisons 13a jusqu'à l'enceinte centrale 14.

D'autres organes fonctionnels sont installés avant la fermeture du cryostat parmi lesquels :
- un câblage électrique spécifique 80 entre l'interface de connexion électrique 40 et le composant spatial 300 fonctionnant à température cryogénique, lequel câblage est logé dans un canal ménagé dans les différentes cloisons 13a, ce canal traversant lesdites cloisons jusqu'à l'enceinte centrale 14.
- des tresses thermiques 71 et 72 multi-feuillets en aluminium (cf. fig.13) entre les doigts froids 60 et le composant spatial fonctionnant à température cryogénique, lesquelles tresses sont aussi insérées dans les passages 15 dans le prolongement des doigts froids,
- un écran thermique transparent 90 (non représenté sur les figures 11 à 14 mais un écran similaire est visible sur la fig. 17) que l'on place frontalement devant le plan focal du composant spatial 300. Ensuite, la deuxième partie monobloc 10b est assemblée à la première afin de fermer le cryostat, isolant ainsi le composant spatial, tel qu'un capteur optique, comme représenté à la figure 14.

Le cryostat peut ensuite être monté sur une plateforme satellite grâce à ses éléments extérieurs de solidarisation (bipodes) 20.

Les figures 19 à 21 illustrent un troisième exemple de réalisation selon l'invention.

Ce cryostat 200 comprend une unique partie monobloc 210a, une première série 210b de capots supérieurs 213b indépendants et une seconde série 210c de capots inférieurs 213c indépendants.

La partie monobloc 210a est par exemple réalisée par impression 3D. Les capots sont par exemple réalisés par impression 3D ou par usinage, puis traités pour leur ajouter un plaquage doré.

La partie monobloc 210a est similaire à la partie monobloc centrale 110b de l'exemple de réalisation des figures 15 à 18 en ce qu'elle est globalement annulaire et cylindrique d'axe X, et en ce qu'elle comprend une pluralité de cloisons, dont une cloison intérieure 213a(1), qui délimite partiellement une enceinte centrale 214 destiné à recevoir le composant spatial devant être maintenu à des températures très basses, une cloison extérieure 213a(3) et plusieurs -en l'exemple deux- cloisons intermédiaires 213a(2). Toutes les cloisons sont globalement cylindriques, coaxiales, espacées les unes des autres ; elles présentent des dimensions croissantes en allant de la cloison intérieure 213a(1) à la cloison extérieure 213a(3).

Les cloisons de la partie monobloc 210a sont rendues solidaires les unes des autres par des éléments intérieurs de jonction qui peuvent être des tiges doubles en forme de V comme précédemment décrit pour l'exemple de réalisation des figures 8 à 10.

La figure 21 montre une alternative de réalisation pour les éléments intérieurs de jonction. Dans cette alternative, les éléments intérieurs de jonction comprennent plusieurs ensembles, dont un ensemble 230 et un ensemble 231, de tiges simples rectilignes. Les tiges 230(1), 230(2) et 230(3) d'un même ensemble 230 (idem pour l'ensemble 231) sont alignées et s'étendent dans un plan longitudinal contenant l'axe principal X de la partie structurale monobloc 210a, selon une direction inclinée par rapport à un plan transversal. En d'autres termes, les tiges d'un même ensemble s'étendent suivant une même direction, qui coupe l'axe principal X mais forme avec cet axe un angle qui n'est pas égal à 90°.

De plus, les directions selon lesquelles les tiges simples sont alignées forment avec un plan transversal (ou avec l'axe X) des angles qui, de préférence, varient d'un ensemble à un autre, de sorte que les points de connexion entre la cloison extérieure 213a(3) et la tige 230(3) associée à ladite cloison sont situés à des hauteurs (le long de l'axe X) qui varient d'un ensemble de tiges à un autre.

En variante, les droites selon lesquelles sont disposés les deux ensembles de tiges 230 et 231 ont un même angle d'inclinaison par rapport à l'axe central X de la partie monobloc.

Comme précédemment expliqué pour les éléments intérieurs de jonction en V, l'alignement des tiges par ensemble, avec des angles et/ou des directions choisis judicieusement offrent un bon compromis entre résistance mécanique et résistance thermique.

Outre la partie monobloc centrale 210a, le cryostat comprend une première série de capots supérieurs 210b comprenant un capot supérieur intérieur 213b(1), un ou plusieurs -en l'exemple deux- capots supérieurs intermédiaires 213b(2), et un capot supérieur extérieur 213b(3).

Le cryostat comprend de façon analogue une seconde série de capots inférieurs 210c, comprenant un capot inférieur intérieur 213c(1), deux capots inférieurs intermédiaires 213c(2) et un capot inférieur extérieur 213c(3).

Les capots intérieurs, respectivement supérieur 213b(1) et inférieur 213c(1) viennent dans le prolongement axial de la cloison intérieure 213a(1) de la partie monobloc 210a et sont fixés à cette dernière. La cloison intérieure 213a(1) et les deux capots intérieurs 213b(1) et 213c(1) forment ainsi un écran intérieur qui délimite une enceinte fermée 214 destinée à accueillir le composant spatial 300 à refroidir.

Le plus petit des capots intermédiaires inférieurs 213c(2) et le plus petit des capots intermédiaires supérieurs 213b(2) viennent dans le prolongement axial de la plus petite des cloisons intermédiaires 213a(2) de la partie monobloc 210a et sont fixés à ladite cloison pour former un premier écran intermédiaire entourant l'écran intérieur. De même, le plus grand des capots intermédiaires inférieurs 213c(2) et le plus grand des capots intermédiaires supérieurs 213b(2) viennent dans le prolongement axial de la plus grande des cloisons intermédiaires 213a(2) de la partie monobloc 210a et sont fixés à ladite cloison pour former un second écran intermédiaire entourant le premier écran intermédiaire.

Enfin, les capots extérieurs, respectivement supérieur 213b(3) et inférieur 213c(3), viennent dans le prolongement axial de la cloison extérieure 213a(3) de la partie monobloc 210a et sont fixés à cette cloison pour former un écran extérieur.

En d'autres termes, contrairement aux cloisons susmentionnées, les capots ne sont pas liés entre eux et ne forment donc pas des parties monoblocs structurales aptes à supporter et transmettre des efforts d'un écran à un autre.

De préférence les capots supérieurs 213b(1) à 213b(3) et inférieurs 213c(1) à 213c(3) sont intégralement recouverts d'un revêtement doré. Ce revêtement doré permet de moduler les propriétés d'émissivité et d'absorptivité régissant le transfert radiatif et d'optimiser ainsi l'environnement radiatif. Ce plaquage or du capot est par exemple obtenu par dépôt électrolytique sur une pièce obtenue par usinage ou impression 3D.

Le cryostat 200 comprend de plus des éléments extérieurs de solidarisation 20 en forme de bipodes pour sa solidarisation à une plateforme satellite. Tous les bipodes extérieurs 20 du cryostat 200 sont fixés à la partie monobloc 210a de sorte que tous les efforts auxquels est soumis le composant spatial fonctionnant à température cryogénique transitent par cette partie monobloc, dont la rigidité est garantie par les éléments intérieurs de jonction entre écrans.

En revanche, l'interface de connexion 240 pour l'alimentation électrique et le contrôle de l'instrument, ainsi que la récupération des données de mesure captées par l'instrument, peut être portée par un capot extérieur, par exemple le capot extérieur supérieur 213b(3).

Bien entendu, le cryostat comprend aussi un dispositif de refroidissement de l'enceinte 214, par exemple au moins un doigt froid isolé 260 qui traverse les écrans et peut être prolongé par une tresse thermique pour atteindre et refroidir l'enceinte centrale 214.

Le doigt froid peut être isolé des écrans par un manchon en isolant multicouche (MLI), telle manchon 105 illustré à la figure 12A, le passage ménagé dans les écrans pour recevoir le doigt froid isolé étant de préférence suffisamment grand pour que le manchon en MLI ne soit pas en contact avec les cloisons 213a. En variante ou en combinaison, le doigt froid peut être isolé des écrans par un film polymère en soufflet, telle film 106 de la figure 12B, venant au contact des cloisons 213a.

Le cryostat 200 comprend de plus un écran thermique transparent 290 qui vient combler et isoler thermiquement une ouverture 221 (voir Fig. 19) ménagée dans le corps du cryostat en regard du composant spatial fonctionnant à température cryogénique, tel qu'un détecteur optique.

Le cryostat selon l'invention n'est pas limité aux exemples illustrés. Ainsi par exemple, le cryostat pourrait comprendre deux parties monoblocs et une seule série de capots indépendants, par exemple une partie monobloc centrale, similaire à la partie centrale annulaire 210a de la figure 19, une partie monobloc inférieure formant une embase telle l'embase 10a des fig. 15 à 18, et une série de capots indépendants supérieurs tels les capots 213b(1) à 213b(3) de la figure 19. Dans ce cas, les éléments extérieurs de solidarisation peuvent être soit tous fixés à la partie monobloc centrale, soit tous fixés sur la partie monobloc inférieure (embase), soit répartis sur les deux parties monoblocs.

En variante, le cryostat pourrait comprendre une seule partie monobloc et une seule série de capots indépendants, à savoir par exemple :
- une partie monobloc, comprenant un tronçon cylindrique correspondant à une partie centrale annulaire du corps et un tronçon conique ou plan correspondant à une partie inférieure (ou embase) du corps,
- et une série de capots supérieurs.

D'autres combinaisons sont bien sûr possibles.

Dans les diverses combinaisons proposées précédemment, le terme « monobloc » dans l'expression « partie monobloc » sous-entend que cette partie se présente sous la forme d'un seul bloc comme par exemple un bloc monolithique obtenu par exemple par impression 3D.

Une partie monobloc est par exemple autoportante et suffisamment rigide pour reprendre, en fonctionnement, tous les efforts subis par le cryostat et le composant qu'il contient. Parce qu'elle répond parfaitement aux exigences en très basses températures et parce qu'elle présente un comportement mécanique amélioré, la structure mécano-thermique du cryostat 100 ou 200 selon l'invention est particulièrement adaptée aux missions embarquant une instrumentation ultrasensible, notamment pour la détection infrarouge, qui doit fonctionner à des températures extrêmement basses pour dresser des cartes précises d'infimes fluctuations de température, parfois de l'ordre du cent-millième de degré. Une telle instrumentation peut comprendre des surfaces optiques (lentilles, miroirs, etc.), des capteurs infrarouges, des bolomètres, etc. Bien entendu, cela n'est pas limitatif des applications du cryostat de l'invention, qui peut coopérer avec d'autres types d'instruments ou composants fonctionnant à des températures moins extrêmes. L'utilisation d'une technologie de fabrication additive rend possible la fabrication de ce design judicieux tout en offrant un cout et un délai de fabrication concurrentiels.

## Revendications

1. Cryostat (100 ; 200) pour au moins un composant spatial (300) fonctionnant à température cryogénique, le cryostat comprenant :
- une enceinte centrale (14 ; 114 ; 214), fermée et refroidie, configurée pour recevoir le composant spatial,
- des écrans métalliques successifs (13), espacés les uns des autres, dont un écran intérieur, un écran extérieur et un ou plusieurs écrans intermédiaires, l'écran intérieur étant configuré pour supporter le composant spatial (300) et délimitant l'enceinte centrale (14 ; 114 ; 214) pour recevoir ledit composant spatial, le ou les écrans intermédiaires et l'écran extérieur étant disposés les uns autour des autres de façon à délimiter chacun un volume fermé recevant l'écran précédent de plus petite taille,
- un dispositif de refroidissement pour le refroidissement de l'enceinte centrale à température cryogénique,
- des éléments extérieurs de solidarisation (20) fixés à l'écran extérieur, pour la solidarisation du cryostat (100 ; 200) à une plateforme satellite,
- des éléments intérieurs de jonction entre écrans (30 ; 230, 230(1), 230(2), 230(3), 231), qui maintiennent lesdits écrans (13) espacés les uns des autres,
le cryostat étant **caractérisé en ce qu'**il comprend au moins une partie monobloc (10a ; 210a) comprenant une succession de cloisons (13a ; 213a) dont une cloison intérieure (13a(1) ; 213a(1)), une cloison extérieure (13a(3) ; 213a(3)) et une ou plusieurs cloisons intermédiaires (13a(2) ; 213a(2)), correspondant respectivement à une partie de l'écran intérieur, une partie de l'écran extérieur et une partie du ou des écrans intermédiaires, lesdites cloisons étant espacées les unes des autres et maintenues solidaires entre elles par au moins une partie des éléments intérieurs de jonction entre écrans (30 ; 230, 230(1), 230(2), 230(3), 231).

2. Cryostat selon la revendication 1, dans lequel le dispositif de refroidissement comprend un ou plusieurs doigts froids (60 ; 260) pour refroidir l'enceinte centrale et, pour chacun des doigts froids, un passage transversal (15) traversant les écrans métalliques successifs (13) jusqu'à l'enceinte centrale (14 ; 114 ; 214) pour recevoir ledit doigt froid, le ou les doigts froids n'étant pas en contact avec les écrans.

3. Cryostat selon la revendication 1 ou 2, dans lequel les éléments intérieurs de jonction entre écrans (30 ; 230, 230(1), 230(2), 230(3), 231) sont disposés entre les écrans successifs et configurés pour assurer à eux seuls une tenue mécanique entre l'écran extérieur et l'écran intérieur, lesdits éléments intérieurs de jonction étant configurés pour supporter des efforts déterminés induits au moins par une masse du composant spatial (300) et des masses des écrans (13).

4. Cryostat selon l'une des revendications 1 à 3, dans lequel les éléments intérieurs de jonction entre écrans comprennent des tiges doubles en V (30) entre les écrans successifs, les V étant répartis angulairement autour d'un axe principal (X) ou d'un point central du cryostat selon au moins trois directions radiales.

5. Cryostat selon l'une des revendications 1 à 4, dans lequel les éléments intérieurs de jonction entre écrans comprennent plusieurs ensembles (230, 231) de tiges simples (230(1), 230(2), 230(3)), les tiges simples d'un même ensemble étant alignées selon une droite traversant les écrans, les droites de deux ensembles distincts (230, 231) étant non parallèles et non coplanaires entre elles.

6. Cryostat selon l'une des revendications 1 à 5, dans lequel les éléments intérieurs de jonction entre écrans (30 ; 230(1), 230(2), 230(3), 231) sont réalisés d'un seul bloc avec au moins une partie des écrans (13).

7. Cryostat selon l'une des revendications 1 à 6, dans lequel ladite partie monobloc est réalisée par fabrication additive.

8. Cryostat selon la revendication 1 à 7, **caractérisé en ce que** :
- le cryostat comprend une pluralité de parties monoblocs (10a, 10b ; 110a, 110b, 110c) ayant chacune une cloison intérieure (13a(1), 13b(1) ; 113a(1), 113b(1), 113c(1)), une cloison extérieure (13a(3), 13b(3) ; 113a(3), 113b(3)) 113c(3)) et une ou plusieurs cloisons intermédiaires (13a(2), 13b(2) ;113a(2), 113b(2)) 113c(2)), les cloisons de deux parties monoblocs distinctes parmi lesdites parties monoblocs correspondant à deux parties distinctes des écrans,
- les cloisons intermédiaires (13a(2), 13b(2) ; 113b(2), 113c(2) ; 113a(2), 113b(2)) ou intérieures (13a(1), 13b(1) ; 113b(1), 113c(1) ; 113a(1), 113b(1)), de deux parties monoblocs distinctes et adjacentes (10a, 10b ; 110b, 110c ; 110a, 110b) parmi la pluralité de parties monoblocs, qui sont dans le prolongement l'une de l'autre étant non jointives,
- les cloisons extérieures (13a(3), 13b(3) ; 113b(3), 113c(3) ; 113a(3), 113b(3)), de deux parties monoblocs distinctes et adjacentes parmi la pluralité de parties monoblocs, qui sont dans le prolongement l'une de l'autre étant jointives et fixées l'une à l'autre.

9. Cryostat selon la revendication 8, dans lequel les cloisons intermédiaires (13a(2), 13b(2)) ou intérieures (13a(1), 13b(1)) qui sont dans le prolongement l'une de l'autre, ont des extrémités en vis-à-vis dont au moins l'une de ces extrémités en vis-à-vis présente un décrochement de façon à former une chicane (130c) avec l'autre extrémité en vis-à-vis.

10. Cryostat selon l'une des revendications 1 à 9, dans lequel les éléments extérieurs de solidarisation (20) sont soit tous fixés sur la cloison extérieure d'une seule des parties monoblocs, soit répartis sur les cloisons extérieures de plusieurs des parties monoblocs.

11. Cryostat selon l'une des revendications 1 à 10, **caractérisé en ce que** au moins l'une (110b ; 210a) desdites parties monoblocs est une partie structurale annulaire dont chaque cloison intérieure (113b(1) ; 213a(1)), intermédiaire (113b(2) ; 213a(2)) et extérieure (113b(3) ; 213a(3)) est annulaire.

12. Cryostat selon l'une des revendications 1 à 11, **caractérisé en ce que** chacun des écrans du cryostat est entièrement formé par l'assemblage des cloisons des parties monoblocs (10a, 10b ; 110a, 110b, 110c).

13. Cryostat selon la revendication 11, dans lequel :
- le cryostat comprend au moins une série (210b, 210c) de capots indépendants dont, pour chaque série, un capot intérieur (213b(1), 213c(1)), un capot extérieur (213b(3), 213c(3)) et un ou plusieurs capots intermédiaires (213b(2), 213c(2)), chaque série de capots correspondant respectivement à une autre partie des écrans, les capots d'une même série étant agencés les uns dans les autres, à distance les uns des autres, sans éléments intérieurs de jonction,
- chacun desdits capots (213b(1), 213b(2), 213b(3), 213c(1), 213c(2), 213c(3)) venant dans le prolongement de et étant fixé à l'une des cloisons (213a(1), 213a(2), 213a(3)) de ladite partie structurale annulaire (210a), chacun des écrans du cryostat étant ainsi entièrement formé par au moins l'une des cloisons de la partie structurale annulaire et par l'un des capots de chaque série.

14. Cryostat selon la revendication 13, dans lequel au moins une partie de chacun des capots (213b(1), 213b(2), 213b(3), 213c(1), 213c(2), 213c(3)) est pourvue d'un revêtement doré.

15. Cryostat selon l'une des revendications 2 à 14, dans lequel chacun des doigts froids (60 ; 260) est thermiquement isolé des écrans, un revêtement thermiquement isolant étant disposé contre au moins l'un des doigts froids (60) dans le passage transversal (15) dudit doigt froid, et/ou un revêtement thermiquement isolant en soufflet étant disposé autour d'au moins l'un des doigts froids (60), dans le passage transversal (15) dudit doigt froid et entre les écrans (13).

16. Engin spatial **caractérisé en ce qu'**il comprend un composant spatial (300) qui fonctionne à température cryogénique et est disposé dans un cryostat selon l'une des revendications 1 à 15, le cryostat étant fixé sur une plateforme de l'engin spatial.

## Patentansprüche

1. Kryostat (100; 200) für mindestens eine Raumfahrtkomponente (300), die bei kryogener Temperatur funktioniert, wobei der Kryostat Folgendes umfasst:
- ein zentrales Gehäuse (14; 114; 214), das geschlossen und gekühlt und dazu konfiguriert ist, die Raumfahrtkomponente aufzunehmen,
- aufeinanderfolgende, voneinander beabstandete metallische Abschirmungen (13), darunter eine Innenabschirmung, eine Außenabschirmung und eine oder mehrere Zwischenabschirmungen, wobei die Innenabschirmung dazu konfiguriert ist, die Raumfahrtkomponente (300) zu tragen, und das zentrale Gehäuse (14; 114; 214) begrenzt, um die Raumfahrkomponente aufzunehmen, wobei die eine oder mehreren Zwischenabschirmungen und die Außenabschirmung umeinander herum angeordnet sind, um jeweils ein geschlossenes Volumen zu begrenzen, das die vorherige Abschirmung kleinerer Größe aufnimmt,
- eine Kühlvorrichtung zum Abkühlen des zentralen Gehäuses auf eine kryogene Temperatur,
- äußere Befestigungselemente (20), die an der Außenabschirmung befestigt sind, zum Befestigen des Kryostaten (100; 200) an einer Satellitenplattform,
- innere Verbindungselemente zwischen den Abschirmungen (30; 230, 230(1), 230(2), 230(3), 231), die die Abschirmungen (13) voneinander beabstandet halten,
wobei der Kryostat **dadurch gekennzeichnet ist, dass** er mindestens einen einteiligen Abschnitt (10a; 210a) umfasst, der eine Reihe von Trennwänden (13a; 213a) umfasst, darunter eine innere Trennwand (13a(1); 213a(1)), eine äußere Trennwand (13a(3); 213a(3)) und eine oder mehrere Zwischentrennwände (13a(2); 213a(2)), die jeweils einem Abschnitt der Innenabschirmung, einem Teil der Außenabschirmung und einem Teil der einen oder mehreren Zwischenabschirmungen entsprechen, wobei die Trennwände voneinander beabstandet sind und durch mindestens einen Abschnitt der inneren Verbindungselemente zwischen den Abschirmungen (30; 230, 230(1), 230(2), 230(3), 231) zusammengehalten werden.

2. Kryostat nach Anspruch 1, wobei die Kühlvorrichtung einen oder mehrere Kühlfinger (60; 260) zum Kühlen des zentralen Gehäuses und einen Querkanal (15) für jeden der Kühlfinger umfasst, der durch die aufeinanderfolgenden metallischen Abschirmungen (13) bis zum zentralen Gehäuse (14; 114; 214) verläuft, um den Kühlfinger aufzunehmen, wobei der eine oder die mehreren Kühlfinger nicht in Kontakt mit den Abschirmungen stehen.

3. Kryostat nach Anspruch 1 oder 2, wobei die inneren Verbindungselemente zwischen den Abschirmungen (30; 230, 230(1), 230(2), 230(3), 231) zwischen den aufeinanderfolgenden Abschirmungen angeordnet und dazu konfiguriert sind, alleine für sich eine mechanische Festigkeit zwischen der Außenabschirmung und der Innenabschirmung zu gewährleisten, wobei die inneren Verbindungselemente dazu konfiguriert sind, bestimmten Kräften standzuhalten, die mindestens durch eine Masse der Raumfahrtkomponente (300) und Massen der Abschirmungen (13) induziert werden.

4. Kryostat nach einem der Ansprüche 1 bis 3, wobei die inneren Verbindungselemente zwischen den Abschirmungen doppelte V-förmige Stäbe (30) zwischen den aufeinanderfolgenden Abschirmungen umfassen, wobei die Vs winkelmäßig um eine Hauptachse (X) oder einen zentralen Punkt des Kryostaten in mindestens drei radiale Richtungen verteilt sind.

5. Kryostat nach einem der Ansprüche 1 bis 4, wobei die inneren Verbindungselemente zwischen den Abschirmungen mehrere Sätze (230, 231) einfacher Stäbe (230(1), 230(2), 230(3)) umfassen, wobei die einfachen Stäbe derselben Anordnung entlang einer geraden Linie ausgerichtet sind, die durch die Abschirmungen verläuft, wobei die geraden Linien zweier unterschiedlicher Anordnungen (230, 231) nicht parallel und nicht koplanar zueinander sind.

6. Kryostat nach einem der Ansprüche 1 bis 5, wobei die inneren Verbindungselemente zwischen den Abschirmungen (30; 230(1), 230(2), 230(3), 231) mindestens teilweise in einem einzigen Block mit mindestens einem Abschnitt der Abschirmungen (13) ausgebildet sind.

7. Kryostat nach einem der Ansprüche 1 bis 6, wobei der einteilige Abschnitt durch additive Fertigung ausgebildet ist.

8. Kryostat nach Anspruch 1 bis 7, **dadurch gekennzeichnet, dass**:
- der Kryostat eine Vielzahl von einteiligen Abschnitten (10a, 10b; 110a, 110b, 110c) umfasst, die jeweils eine innere Trennwand (13a(1), 13b(1); 113a(1), 113b(1), 113c(1)), eine äußere Trennwand (13a(3), 13b(3); 113a(3), 113b(3), 113c(3)) und eine oder mehrere Zwischentrennwände (13a(2), 13b(2); 113a(2), 113b(2), 113c(2)) aufweist, wobei die Trennwände zweier unterschiedlicher einteiliger Abschnitte unter den einteiligen Abschnitten zwei unterschiedlichen Abschnitten der Abschirmungen entsprechen,
- die Zwischentrennwände (13a(2), 13b(2); 113b(2), 113c(2); 113a(2), 113b(2)) oder die inneren Trennwände (13a(1), 13b(1); 113b(1), 113c(1); 113a(1), 113b(1)) aus zwei unterschiedlichen und benachbarten einteiligen Abschnitten (10a, 10b; 110b, 110c; 110a, 110b) aus der Vielzahl von einteiligen Abschnitten, die eine Verlängerung voneinander darstellen, nicht verbindbar sind,
- die äußeren Trennwände (13a(3), 13b(3); 113b(3), 113c(3); 113a(3), 113b(3)) aus zwei verschiedenen und benachbarten einteiligen Abschnitten aus der Vielzahl von einteiligen Abschnitten, die eine Verlängerung voneinander darstellen, verbindbar und aneinander befestigt sind.

9. Kryostat nach Anspruch 8, wobei die Zwischentrennwände (13a(2), 13b(2)) oder die inneren Trennwände (13a(1), 13b(1)), die eine Verlängerung voneinander darstellen, einander zugewandte Enden aufweisen, wobei mindestens eines der zugewandten Enden eine Aussparung aufweist, um mit dem anderen zugewandten Ende eine Aufnahmeverbindung (130c) zu bilden.

10. Kryostat nach einem der Ansprüche 1 bis 9, wobei die äußeren Befestigungselemente (20) entweder alle an der äußeren Trennwand nur eines der einteiligen Abschnitte befestigt sind oder an den äußeren Trennwänden mehrerer der einzelnen Abschnitte verteilt sind.

11. Kryostat nach einem der Ansprüche 1 bis 10, **dadurch gekennzeichnet, dass** mindestens einer (110b; 210a) der einteiligen Abschnitte ein ringförmiger Strukturabschnitt ist, von dem jede innere Trennwand (113b(1); 213a(1)), Zwischentrennwand (113b(2); 213a(2)) und äußere Trennwand (113b(3); 213a(3)) ringförmig ist.

12. Kryostat nach einem der Ansprüche 1 bis 11, **dadurch gekennzeichnet, dass** jede der Abschirmungen des Kryostaten vollständig durch die Montage der Trennwände der einteiligen Abschnitte (10a, 10b; 110a, 110b, 110c) gebildet ist.

13. Kryostat nach Anspruch 11, wobei:
- der Kryostat mindestens eine Reihe (210b, 210c) unabhängiger Abdeckungen umfasst, darunter für jede Reihe eine innere Abdeckung (213b(1), 213c(1)), eine äußere Abdeckung (213b(3), 213c(3)) und eine oder mehrere Zwischenabdeckungen (213b(2), 213c(2)), wobei jede Reihe von Abdeckungen jeweils einem anderen Abschnitt der Abschirmungen entspricht, wobei die Abdeckungen derselben Reihe ineinander mit einem Abstand untereinander ohne innere Verbindungselemente angeordnet sind,
- jede der Abdeckungen (213b(1), 213b(2), 213b(3), 213c(1), 213c(2), 213c(3)) an einer der Trennwände (213a(1), 213a(2), 213a(3)) des ringförmigen Strukturabschnitts (210a) befestigt ist und diese verlängert, wobei jede der Abschirmungen des Kryostaten somit vollständig durch mindestens eine der Trennwände des ringförmigen Strukturabschnitts und durch die eine der Abdeckungen jeder Reihe gebildet wird.

14. Kryostat nach Anspruch 13, wobei mindestens ein Abschnitt jeder der Abdeckungen (213b(1), 213b(2), 213b(3), 213c(1), 213c(2), 213c(3)) mit einer goldenen Beschichtung versehen ist.

15. Kryostat nach einem der Ansprüche 2 bis 14, wobei jeder der Kühlfinger (60; 260) gegenüber den Abschirmungen thermisch isoliert ist, wobei an mindestens einem der Kühlfinger (60) im Querkanal (15) des Kühlfingers eine thermisch isolierende Beschichtung angeordnet ist und/oder um mindestens einen der Kühlfinger (60) herum, im Querkanal (15) des Kühlfingers und zwischen den Abschirmungen (13), eine thermisch isolierende harmonikaförmige Abdeckung angeordnet ist.

16. Raumfahrzeug, **dadurch gekennzeichnet, dass** es eine Raumfahrtkomponente (300) umfasst, die bei kryogener Temperatur funktioniert und in einem Kryostaten nach einem der Ansprüche 1 bis 15 angeordnet ist, wobei der Kryostat an einer Plattform des Raumfahrzeugs befestigt ist.

## Claims

1. A cryostat (100; 200) for at least one space component (300) operating at cryogenic temperature, the cryostat comprising:
- a central, closed and cooled enclosure (14; 114; 214), configured to receive the space component,
- successive metal shields (13), spaced apart from one another, including an internal shield, an external shield and one or more intermediate shield(s), the internal shield being configured to support the space component (300) and delimiting the central enclosure (14; 114; 214) to receive said space component, the intermediate shield(s) and the external shield being arranged around one another so that each delimits a closed volume receiving the preceding shield of smaller size,
- a cooling device for cooling the central enclosure at cryogenic temperature,
- external securing elements (20) fastened to the external shield, for securing the cryostat (100; 200) to a satellite platform,
- internal inter-shield joining elements (30; 230, 230(1), 230(2), 230(3), 231), which hold said shields (13) spaced apart from one another,
the cryostat being **characterized in that** it comprises at least one integral portion (10a; 210a) comprising a series of partitions (13a; 213a) including an internal partition (13a(1); 213a(1)), an external partition (13a(3); 213a(3)) and one or more intermediate partition(s) (13a(2); 213a(2)), respectively corresponding to a portion of the internal shield, a portion of the external shield and a portion of the one or more intermediate shield(s), said partitions being spaced apart from one another and held together by at least one portion of the internal inter-shield joining elements (30; 230, 230(1), 230(2), 230(3), 231).

2. The cryostat according to claim 1, wherein the cooling device comprises one or more cold finger(s) (60; 260) for cooling the central enclosure and, for each of the cold fingers, a transverse passage (15) passing through the successive metal shields (13) up to the central enclosure (14; 114; 214) for receiving said cold finger, the cold finger(s) not being in contact with the shields.

3. The cryostat according to claim 1 or 2, wherein the internal inter-shield joining elements (30; 230, 230(1), 230(2), 230(3), 231) are arranged between the successive shields and configured to confer mechanical strength on their own between the external shield and the internal shield, said internal joining elements being configured to withstand determined forces induced at least by a mass of the space component (300) and masses of the shields (13).

4. The cryostat according to one of claims 1 to 3, wherein the internal inter-shield joining elements comprise V-shaped double rods (30) between the successive shields, the Vs being angularly distributed around a main axis (X) or a central point of the cryostat according to at least three radial directions.

5. The cryostat according to one of claims 1 to 4, wherein the internal inter-shield joining elements comprise several sets (230, 231) of single rods (230(1), 230(2), 230(3)), the single rods of a same set being aligned according to a straight line passing through the shields, the straight lines of two distinct sets (230, 231) being non-parallel and non-coplanar with one another.

6. The cryostat according to one of claims 1 to 5, wherein the internal inter-shield joining elements (30; 230(1), 230(2), 230(3), 231) are made integral with at least a portion of the shields (13).

7. The cryostat according to one of claims 1 to 6, wherein said integral portion is made by additive manufacturing.

8. The cryostat according to claim 1 to 7, **characterized in that**:
- the cryostat comprises a plurality of integral portions (10a, 10b; 110a, 110b, 110c) each having an internal partition (13a(1), 13b(1); 113a(1), 113b(1), 113c(1)), an external partition (13a(3), 13b(3); 113a(3), 113b(3)) 113c(3)) and one or more intermediate partition(s) (13a(2), 13b(2); 113a(2), 113b(2)) 113c(2)), the partitions of two distinct integral portions among said integral portions corresponding to two distinct portions of the shields,
- the intermediate (13a(2), 13b(2); 113b(2), 113c(2); 113a(2), 113b(2)) or internal (13a(1), 13b(1); 113b(1), 113c(1); 113a(1), 113b(1)) partitions of two distinct and adjacent integral portions (10a, 10b; 110b, 110c; 110a, 110b) among the plurality of integral portions which are in line with one another being non-contiguous,
- the external partitions (13a(3), 13b(3); 113b(3), 113c(3); 113a(3), 113b(3)) of two distinct and adjacent integral portions among the plurality of integral portions which are in line with one another being contiguous and fastened to one another.

9. The cryostat according to claim 8, wherein the intermediate (13a(2), 13b(2)) or internal (13a(1), 13b(1)) partitions which are in line with one another have facing ends, at least one of these facing ends having a recess so as to form a baffle (130c) with the other facing end.

10. The cryostat according to one of claims 1 to 9, wherein the external securing elements (20) are either all fastened on the external partition of only one of the integral portions, or distributed over the external partitions of several ones of the integral portions.

11. The cryostat according to one of claims 1 to 10, **characterized in that** at least one (110b; 210a) of said integral portions is an annular structural portion wherein each internal (113b(1); 213a(1)), intermediate (113b(2); 213a(2)) and external (113b(3); 213a(3)) partition is annular.

12. The cryostat according to one of claims 1 to 11, **characterized in that** each of the shields of the cryostat is entirely formed by the assembly of the partitions of the integral portions (10a, 10b; 110a, 110b, 110c).

13. The cryostat according to claim 11, wherein:
- the cryostat comprises at least one series (210b, 210c) of independent cowls including, for each series, an internal cowl (213b(1), 213c(1)), an external cowl (213b(3), 213c(3)) and one or more intermediate cowl(s) (213b(2), 213c(2)), each series of cowls respectively corresponding to another portion of the shields, the cowls of the same series being arranged inside one another, at a distance from one another, with no internal joining elements,
- each of said cowls (213b(1), 213b(2), 213b(3), 213c(1), 213c(2), 213c(3)) lying in line with and being fastened to one of the partitions (213a(1), 213a(2), 213a(3)) of said annular structural portion (210a), each of the shields of the cryostat thereby being entirely formed by at least one of the partitions of the annular structural portion and by one of the cowls of each series.

14. The cryostat according to claim 13, wherein at least one portion of each of the cowls (213b(1), 213b(2), 213b(3), 213c(1), 213c(2), 213c(3)) is provided with a golden coating.

15. The cryostat according to one of claims 2 to 14, wherein each of the cold fingers (60; 260) is thermally insulated from the shields, a heat-insulating coating being arranged against at least one of the cold fingers (60) in the transverse passage (15) of said cold finger, and/or a bellow-fashioned heat-insulating coating being arranged around at least one of the cold fingers (60), in the transverse passage (15) of said cold finger and between the shields (13).

16. A spacecraft **characterized in that** it comprises a space component (300) which operates at cryogenic temperature and is arranged in a cryostat according to one of claims 1 to 15, the cryostat being fastened on a platform of the spacecraft.
